# EUROPÄISCHE PATENTSCHRIFT

(11) **EP 1 549 867 B1**
(45) Veröffentlichungstag und Bekanntmachung des Hinweises auf die Patenterteilung: **08.03.2006**
(21) Anmeldenummer: 03788943.3
(22) Anmeldetag: 08.10.2003
(51) Int. Cl.: F16J 15/06

(54) **BODENAUSLAUFVENTIL FÜR ERMAILLIERTE BEHÄLTER**
BOTTOMS DRAINAGE VALVES DESIGNED IN PARTICULAR FOR ENAMELLED CONTAINERS
VANNE DE VIDANGE PAR LE BAS CON UE EN PARTICULIER POUR DES RECIPIENTS EMAILLES

(30) Priorität: 08.10.2002 DE 10246833
(43) Veröffentlichungstag der Anmeldung: 06.07.2005
(73) Patentinhaber: Eisenwerke Fried. Wilh. Düker GmbH & Co. KGaA, 97753 Karlstadt (DE)
(72) Erfinder: BEHLER, Franz-Josef, 97084 Würzburg (DE); KUNKEL, Helmut, 63846 Laufach (DE)
(74) Vertreter: Hoeger, Stellrecht & Partner Patentanwälte
(86) Internationale Anmeldenummer: PCT/EP2003/011128
(87) Internationale Veröffentlichungsnummer: WO 2004/033941

(56) Entgegenhaltungen:
- EP-A- 0 443 067
- CH-A- 581 795
- DE-U- 29 808 343
- US-A- 4 234 010
- US-A- 4 881 570

## Beschreibung

Die Erfindung bezieht sich auf ein Bodenauslaufventil für insbesondere emaillierte Behälter der chemischen Industrie, an die erhöhte Anforderungen bezüglich Resistenz, Reinigbarkeit und Funktionssicherheit gestellt werden, mit einem Flanschteil, das aus einem in eine ringförmige Aushalsung des Behälters einsetzbaren und den Sitz des Ventiltellers bildenden zylindrischen Abschnitt sowie einem sich quer zu diesem erstreckenden Bund besteht, über den das Flanschteil mit dem Behälter verbindbar ist.

Emaillierte Behälter, für die das Bodenauslaufventil bestimmt ist, haben ihren festen Platz in der chemischen Industrie, besonders in den Bereichen Pharma, Biochemie und Genetik. Die erwähnten Anforderungen an die Reinigbarkeit sind nur durch die Vermeidung von Toträumen oder durch ihre dauerhafte Abdichtung gegen die mediumführenden Bereiche des Behälters und des Ventils zu erreichen. Speziell die Schnittstelle Behälter/Bodenauslaufventil ist unter diesem Gesichtspunkt noch nicht befriedigend konstruktiv optimiert.

Das bei üblichen Bodenauslaufventilen Anwendung findende Flanschteil erfüllt mit seinem zylindrischen Abschnitt nicht nur die Aufgabe, den Sitz des Ventiltellers zu bilden sondem auch das Ventilgehäuse gegen die ringförmige Aufnahme des Behälters zu dichten. Zu diesem Zweck besteht das Flanschteil üblicherweise aus PTFE oder einem PTFE-beschichteten Grundkörper. Da die ringförmige Aushalsung des Behälters emailliert ist und da sich die für die Emaillierung typischen Fertigungstoleranzen durch eine gezielte geometrische Anpassung des Flanschteils in der Regel nicht ausgleichen lassen, kommt es hier zu einem undefinierten umlaufenden spaltförmigen Totraum. Überlagert wird die Problematik durch die mögliche Temperaturwechselbelastung der gesamten Anlage, die aufgrund der unterschiedlichen Ausdehnungskoeffizienten und der geometrischen Verhältnisse die Spaltweite ebenfalls negativ beeinflussen kann.

Bekannte Lösungsversuche machen von umlaufenden Dichtlippensystemen Gebrauch, jedoch auch von elastisch verformbaren, flächig wirkenden Ringeinlagen im Oberteil des Flanschteils oder sogar von druckbeaufschlagten Ringbandagen (DE-298 08 343 U). Dabei ist in der DE-U-2 980 83 43 ein Ventilsik für Behälter-Bodenventile mit zumindest einem elastischen, flächigen Teilbeseich an der Sussenfläche des in den Behälter ragenden Zylinderabschnittes angegeben.

Der Erfindung liegt die Aufgabe zugrunde, das Bodenauslaufventil der eingangs genannten Art so weiter auszubilden, daß der ringförmige/spaltförmige Totraum auch ohne aufwendige Maßnahmen, wie aufweitbare, verformbare Ringbandagen o. dgl. gegen den mediumführenden Behälter- und Ventilinnenraum abgedichtet ist.

Das Bodenauslaufventil nach der Erfindung, bei dem diese Aufgabe gelöst ist, zeichnet sich im wesentlichen dadurch aus, daß das Flanschteil zum oberen Ende hin eine konische Verjüngung aufweist und daß zwischen dem Flanschteil und der Emailrierung der Behälterwand im Bereich der ringförmigen Aushalsung ein zylindrisches Dichtungsmodul mit einem im oberen Bereich vorgesehenen verstärkten elastisch/plastisch verformbaren ringförmigen Dichtungsbereich eingeschaltet ist. Funktionsprinzip der erfindungsgemäßen Ausführung ist somit die dauerhafte Abdichtung des ringförmigen Totraumes durch eine zweigeteilte Lösung, die aus einem Dichtungsmodul, vorzugsweise aus PTFE und einem modifizierten Flanschteil besteht. Dieses Dichtungsmodul mit Übermaß am oberen zylindrischen Teil wird montageseitig in einem ersten Schritt in die Behälteröffnung eingesetzt. Durch die umspannende Ringtläche der Behälteröffnung wird das ringförmige Dichtungsmodul so vorverformt, daß der gesamte zylindrische Teil des Dichtungsmoduls innen eine konische Geometrie annimmt.

Als besonders zweckmäßig hat sich herausgestellt, daß die Verstärkung des Dichtungsmoduls durch ein im Bereich des freien Endes in das dünnwandige Material eingeschlagenes, elastisch/plastisch verformbares ringförmiges, wechselbares Dichtungselement gebildet ist. Dieses Dichtungselement kann in unterschiedlich starken Querschnitten ausgeführt werden. Je nach tatsächlicher möglicher Ausführung der emaillierten Behälteraushalsung kann dann das entsprechend dimensionierte Dichtungselement zur Optimierung des Verformungsverhaltens und damit der radialen Dichtkräfte ausgewählt und eingesetzt werden. Gemäß einer weiteren günstigen Ausführungsform ist die Verstärkung des Dichtungsmoduls im Bereich des freien Endes durch einen gewellten Auslauf gebildet.

Durch Einsetzen des Flanschteils in das vormontierte Dichtungsmodul wird in dem ringförmigen Dichtungsbereich durch die Konuswirkung in Verbindung mit der montagebedingten axialen Relativbewegung eine radiale elastisch/plastische Verformung des Dichtungsmoduls erreicht. Die geometrische Formgebung des freien Endes des Flanschteils, nämlich die Konizität, und des Dichtungsbereichs des Dichtungsmoduls bewirken die dauerhafte Dichtwirkung durch die resultierenden Radialkräfte und -spannungen.

Als besonderer Vorteil der erfindungsgemäßen Lösung hat sich die einfache Demontagemöglichkeit erwiesen, da durch die Konusform bereits nach geringer Relativbewegung in Löserichtung die dichtenden Radialkräfte und -spannungen aufgehoben werden.

Weitere Einzelheiten, Vorteile und Merkmale der Erfindung ergeben sich aus der folgenden Beschreibung anhand der beigefügten Zeichnung jeweils eines Axialschnitts durch einen Flanschteil des Bodenauslaufventiles, der in eine ringförmige Aushalsung des Behälters unter Zwischenschaltung eines elastisch/plastisch verformbaren Dichtungsmoduls einsetzbar ist, wobei gemäß
- Fig. 1: eine Verstärkung des Dichtungsmoduls durch ein im Bereich des freien Endes in das dünnwandige Material eingeschlagenes, elastisch/plastisches ringförmiges Dichtungselements vorgesehen ist und
- Fig. 2: eine Verstärkung des Dichtungsmoduls im Bereich des freien Endes durch einen gewellten Auslauf des Moduls geschaffen ist.

Aus der Zeichnung ist der Bodenbereich eines emaillierten Behälters, wie er in der chemischen Industrie Anwendung finden, durch Veranschaulichung der ringförmigen Aushalsung 1 dieses Behälters ersichtlich. An derartige Behälter werden erhöhte Anforderungen bezüglich Resistenz, Reinigbarkeit und Funktionssicherheit gestellt.

In die Aushalsung 1 ist ein Bodenauslaufventil mit seinem Flanschteil 2 einsetzbar. Dieser umfaßt einen zylindrischen Abschnitt 2a, der mit seinem oberen Ende 2b den Sitz des nicht dargestellten Ventiltellers bildet, und einen sich quer zum zylindrischen Abschnitt 2a erstreckenden ringförmigen Abschnitt 2c. Über diesen Abschnitt 2c ist das Flanschteil 2 mit dem Behälter verbindbar, und zwar mit einem Flanschrand 1a der Aushalsung 1 des Behälters durch Einspannung dieses Flanschrandes 1a mittels eines an ihm anliegenden Losflansches 3, der mit einem entsprechenden, am ringförmigen Abschnitt 2c unten anliegenden, nicht dargestellten Flansch durch Verschraubung längs der strichpunktiert angedeuteten Linie 4 verspannt ist.

Zwischen dem Flanschteil 2 mit seinem zylindrischen Abschnitt 2a und dem ringförmigen Abschnitt 2c einerseits und dem emaillierten Bereich der ringförmigen Aushalsung 1 des Behälters ist ein Dichtungsmodul 5 eingelagert. Der flache, ringscheibenförmige Abschnitt 5a dieses Dichtungsmoduls 5 ist zwischen dem Flanschrand 1a der Aushalsung 1 und dem ringförmigen Abschnitt 2c des Flanschteils 2 eingespannt. Der von diesem ringscheibenförmigen Abschnitt 5a ausgehende, obere zylindrische Abschnitt 5b des Dichtungsmoduls 5 ist im Bereich des oberen freien Endes mit einem elastisch/plastisch verformbaren ringförmigen Dichtungsbereich 5c versehen.

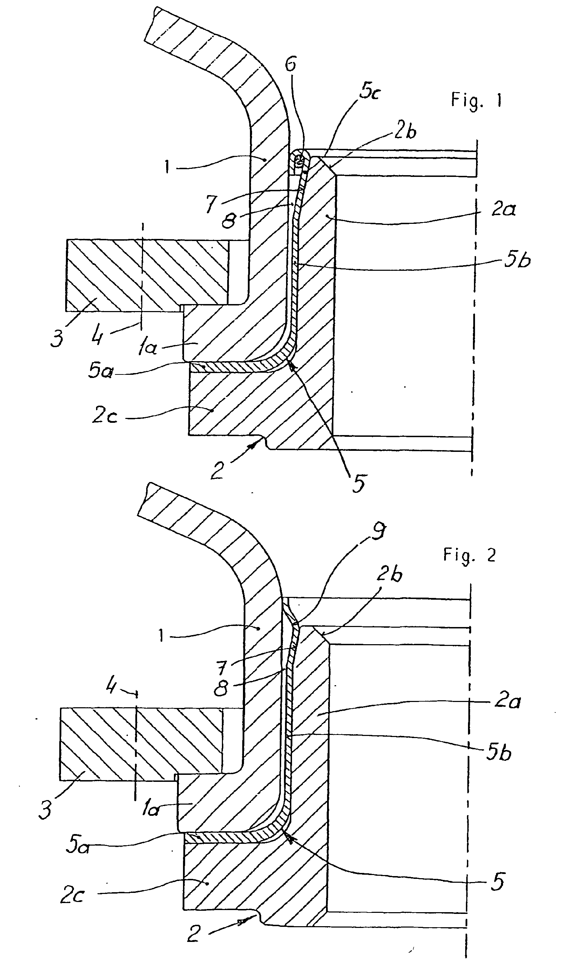

Bei der Ausführung nach Fig. 1 ist dieser Bereich des Dichtungsmoduls 5 durch ein am freien Ende in das dünnwandige Material des Dichtungsmoduls 5 eingeschlagenes, elastisch/plastisch verformbares ringförmiges Dichtungselement 6 gebildet, das beispielsweise aus Gummi bestehen kann. Dieser obere Bereich des Dichtungsmoduls 5 wird im Verlauf der axial geführten Montage des Flanschteiles 2 durch die konische Verjüngung 7 des zylindrischen Abschnittes 2a radial gegen die emaillierte Innenfläche der ringförmigen Aushalsung 1 des Behälters gepreßt und sorgt auf diese Weise durch die bleibende elastisch/plastische Verformung für eine dauerhafte Abdichtung des unterhalb dieses Dichtungsbereiches 5c befindlichen Totraumes 8, unabhängig von der Stärke der die ringförmige Aushalsung 1 des Behälters bedeckenden Emailschicht.

Bei der Ausführung nach Fig. 2 ist die elastisch nachgiebige Verstärkung, die als Dichtungsbereich 5c wirkt, durch einen gewellten Auslauf gebildet, der ebenfalls für eine Abdichtung zwischen der konischen Verjüngung 7 des zylindrischen Abschnitts 2a des Flanschteils 2 und der emaillierten Oberfläche der ringförmigen Aushalsung 1 sorgt.

Zweckmäßigerweise besteht das Dichtungsmodul aus PTFE, das sich durch seine Widerstandsfähigkeit gegenüber aggressiven chemischen Substanzen als auch durch seine elastisch/plastische Verformbarkeit auszeichnet.

## Patentansprüche

1. Bodenauslaufventil für insbesondere emaillierte Behälter der chemischen Industrie, an die erhöhte Anforderungen bezüglich Resistenz, Reinigbarkeit und Funktionssicherheit gestellt werden, mit einem Flanschteil (2), das aus einem in eine ringförmige Aushalsung (1) des Behälters einsetzbaren und den Sitz des Ventiltellers bildenden zylindrischen Abschnitt (2a) sowie einem sich quer zu diesem erstreckenden Bund (2c) besteht, über den das Flanschteil (2) mit dem Behälter verbindbar ist, **dadurch gekennzeichnet, daß** das Flanschteil (2) zum oberen Ende hin eine konische Verjüngung (7) aufweist und daß zwischen dem Flanschteil (2) und der Emaillierung der Behälterwand im Bereich der ringförmigen Aushalsung (1) ein zylindrisches Dichtungsmodul (5) mit einem im oberen Bereich vorgesehenen verstärkten elastisch/plastisch verformbaren ringförmigen Dichtungsbereich (5c) eingeschaltet ist.

2. Bodenausla entil nach Anspruch 1, **dadurch gekennzeichnet, daß** die Verstärkung des Dichtungsmoduls (5) durch ein im Bereich des freien Endes in das dünnwandige Material des Dichtungsmoduls (5) eingeschlagenes, elastisch/plastisch verformbares ringförmiges, wechselbares Dichtungselement (6) gebildet ist

3. Bodenauslaufventil nach Anspruch 1, **dadurch gekennzeichnet, daß** die Verstärkung des Dichtungsmoduls (5) im Bereich des freien Endes durch einen gewellten Auslauf (9) gebildet ist.

4. Bodenauslaufventil nach einem der Ansprüche 1 bis 3, **dadurch gekennzeichnet, daß** das Dichtungsmodul (5) aus PTFE gefertigt ist.

## Claims

1. Base drainage valve in particular for enamelled containers of the chemical industry, which are subject to increased requirements with respect to resistance, ease of cleaning and operational reliability, with a flanged part (2) comprising a cylindrical section (2a), which can be inserted into a ring-shaped neck (1) of the container and form the seat of the valve disc, as well as a collar (2c), which extends transversely to this section and by means of which the flanged part (2) can be connected to the container, **characterised in that** the flanged part (2) has a conical tapering section (7) towards the upper end, and that a cylindrical sealing module (5) with a reinforced elastically/plastically deformable ring-shaped sealing region (5c) provided in the upper region is inserted between the flanged part (2) and the enamelling of the container wall in the region of the ring-shaped neck (1).

2. Base drainage valve according to Claim 1, **characterised in that** the reinforcement of the sealing module (5) is formed by an elastically/plastically deformable ring-shaped exchangeable sealing element (6) folded into the thin-walled material in the region of the free end of the sealing module (5).

3. Base drainage valve according to Claim 1, **characterised in that** the reinforcement of the sealing module (5) in the region of the free end is formed by a wave-shaped outlet (9).

4. Base drainage valve according to one of Claims 1 to 3, **characterised in that** the sealing module (5) is made of PTFE.

## Revendications

1. Vanne de vidange par le fond, en particulier pour des cuves émaillées de l'industrie chimique qui doivent satisfaire à de sévères exigences de résistance, d'aptitude au nettoyage et de sécurité de fonctionnement, comportant une bride (2) qui est formée par une partie (2a) cylindrique, formant le siège de la tête de vanne et pouvant être introduite dans un col annulaire (1) de la cuve, et par une collerette (2c) qui est perpendiculaire à la partie précitée et par l'intermédiaire de laquelle la bride (2) peut être assemblée à la cuve, **caractérisée en ce que** la bride (2) comporte un rétrécissement (7) conique vers l'extrémité supérieure et **en ce qu'**un module d'étanchéité (5) cylindrique, comportant une zone d'étanchéité (5c) annulaire renforcée, élastiquement/plastiquement déformable, prévue dans la zone supérieure, est intercalé entre la bride (2) et l'émaillage de la paroi de cuve dans la zone du col annulaire (1).

2. Vanne de vidange par le fond selon la revendication 1, **caractérisée en ce que** le renforcement du module d'étanchéité (5) est formé par un élément d'étanchéité (6) annulaire amovible, élastiquement/plastiquement déformable, plié dans la zone de l'extrémité libre dans le matériau à paroi mince du module d'étanchéité (5).

3. Vanne de vidange par le fond selon la revendication 1, **caractérisée en ce que** le renforcement du module d'étanchéité (5) est formé dans la zone de l'extrémité libre par une sortie (9) ondulée.

4. Vanne de vidange par le fond selon l'une quelconque des revendications 1 à 3, **caractérisée en ce que** le module d'étanchéité (5) est réalisé en PTFE.
